(19) Europäisches Patentamt
European Patent Office
Office européen des brevets

(11) **EP 1 788 023 A1**

(12) **EUROPEAN PATENT APPLICATION**

(43) Date of publication:
**23.05.2007 Bulletin 2007/21**

(51) Int Cl.:
***C08L 23/10*** *(2006.01)*

(21) Application number: **05257141.1**

(22) Date of filing: **21.11.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | • **Wacholder, Max Borealis GMBH**<br>**4021 linz (AT)**<br>• **Gahleitner Markus**<br>**4501 Neuhofen, Krems (AT)**<br>• **Oysaed, Harry**<br>**3960 Stathelle (NO)**<br>• **Morten Johansen, Geir**<br>**3960 Stathelle (NO)** |
| (71) Applicant: **Borealis Technology Oy**<br>**06101 Porvoo (FI)** | (74) Representative: **Campbell, Neil Boyd**<br>**Frank B. Dehn & Co.**<br>**St Bride's House**<br>**10 Salisbury Square**<br>**London EC4Y 8JD (GB)** |
| (72) Inventors:<br>• **Ommundsen, Espen**<br>**3960 stathelle (NO)**<br>• **Jaaskelainen, Pirjo**<br>**06150 Porvoo (FI)** | |

(54) **Multimodal polypropylene polymer composition**

(57)    A multimodal polymer composition comprising:
(A) a polypropylene homopolymer or a propylene random copolymer comprising propylene and up to 5 weight % of comonomer selected from ethylene and/or $C_{4-10}$ alpha olefin; and
(B) a random copolymer of propylene and comonomer selected from ethylene and/or $C_{4-10}$ alpha olefin;

wherein the total comonomer content of the polymer composition is at least 0.5 wt% and the melt flow rate of the polymer blend is at least 6 g/10 min when measured according to ISO 1133 at 230°C and a load of 2.16 kg.

**EP 1 788 023 A1**

**Description**

This invention relates to a polypropylene based copolymer composition that is suitable for making biaxially oriented films or articles, particularly biaxially-oriented containers, using injection stretch blow moulding (ISBM) processes. In particular, the invention concerns a polymer blend comprising a random copolymer of propylene and ethylene and a second polymer comprising either a second random copolymer of propylene and ethylene or a propylene homopolymer.

The ISBM process involves producing a preform by injection moulding followed by stretching and blowing the preform in order to induce biaxial orientation in the solid phase. ISBM processes are used to make containers such as bottles and jars having very good optical properties. Poly(ethylene terephthalate) (PET) is the most commonly used polymer for ISBM applications because PET has good processing behaviour and produces high quality bottles having good optical and barrier properties.

PET is however a relatively expensive polymer and cannot function at higher temperatures due to poor heat resistance. The skilled man is thus looking for alternatives to PET for ISBM applications.

Polypropylene is considerably cheaper than PET and demonstrates better heat resistance than PET. In some applications, particularly when high temperature resistance is required, it would therefore be advantageous to use polypropylene instead of PET in ISBM processes. However, polypropylene has a narrow processing window when used in ISBM processes, i.e. polypropylene can be stretched or blown only over a narrow temperature range. Thus, polypropylene typically possess a 5°C processing window whereas PET can be processed over 15°C. This narrow range is not favourable industrially since temperature control becomes a large issue.

The present inventors have therefore been addressing the problem of broadening the processing window of polypropylene whilst trying to maintain satisfactory optical and mechanical properties required of ISBM containers. In this regard, whilst polypropylene homopolymers may improve stiffness, they are translucent leading to poor optical properties. On the other hand random copolymers of propylene and ethylene have good optical properties but are not as stiff as polypropylene homopolymers. There is therefore a need for a polymer composition that has the heat resistance properties of polypropylene combined with the good optical and barrier properties of PET, which can be processed over a wide temperature range in ISBM processes.

It is known to blend polypropylene homopolymer with a random copolymer of propylene and ethylene in order to provide a polymer having good mechanical and optical properties. EP-A-0339804 discloses blends of a propylene/olefin random copolymer and substantially isotactic homopolypropylene. The polymers are biaxially stretched in order to produce a bi-oriented film. The olefin is preferably ethylene and is present in the final polymer in an amount of up to about 5 mol %. The polymer blends of EP-A-0339804 have a melt flow rate (MFR) of around 2.1 to 3.2 g/10 min.

The present inventors have surprisingly found that a blend of polypropylene polymers having an overall MFR of 6 to 30 (measured according to ISO 1133 at 230°C and a load of 2.16 kg) possess not only excellent mechanical properties and optical properties but also a broadened processing window. The blend comprises a random copolymer of propylene and ethylene/other comonomer and a second polymer selected from polypropylene homopolymer or a second (different) random copolymer of propylene and ethylene/comonomer. This blend has been found to possess very low haze and a processing window of similar breadth to that of PET and offers therefore an ideal replacement for PET in ISBM applications.

Moreover, the high MFR values allows higher throughputs on film lines or in moulding processes and, in particular in injection moulding applications, reduces the power needed to effect the stretching in the ISBM process.

Thus, viewed from one aspect, the invention provides a multimodal polymer composition comprising:

(A) a polypropylene homopolymer or a propylene random copolymer comprising propylene and up to 5 weight % of comonomer selected from ethylene and/or $C_{4-10}$ alpha olefin; and
(B) a random copolymer of propylene and comonomer selected from ethylene and/or $C_{4-10}$ alpha olefin;

wherein the total comonomer content of the polymer composition is 0.5 to 6 wt% and the melt flow rate of the polymer blend is at least 6 g/10 min when measured according to ISO 1133 at 230°C and a load of 2.16 kg.

Viewed from another aspect the invention provides a process for the preparation of an article, the process comprising injection moulding a polymer composition as hereinbefore defined to prepare a preform and subsequently biaxially stretching and blowing the preform at a temperature below the melting point of the polymer.

Viewed from another aspect the invention provides a process for the preparation of a polymer composition as hereinbefore described the comprising in a first slurry stage polymerising propylene and optionally ethylene and/or $C_{4-10}$ alpha olefin in the presence of a Ziegler Natta catalyst so as to form

(A) a polypropylene homopolymer or a propylene random copolymer comprising propylene and up to 5 weight % of comonomer selected from ethylene and/or $C_{4-10}$ alpha olefin;

transferring the product mixture to a gas phase reactor and subsequently polymerising propylene and ethylene and/or $C_{4-10}$ alpha olefin so as to form

(B) a random copolymer of propylene and comonomer selected from ethylene or C4-10 alpha olefin;

wherein the total comonomer content of the polymer composition is at least 0.5 wt%, e.g. 0.5 to 6 weight % and the melt flow rate of the polymer blend is at least 6 g/10 min when measured according to ISO 1133 at 230°C and a load of 2.16 kg.

Viewed from another aspect the invention provides the use of a polymer composition as hereinbefore described for the manufacture of a film or article by blow moulding, film blowing, film casting or ISBM.

Viewed from another aspect the invention provides film or article having biaxial molecular orientation comprising a polymer composition as hereinbefore described.

The polymer composition of the present invention preferably comprises 10 to 90 wt % of polymer A, preferably 30 to 70 wt %, more preferably 40 to 60 wt % and most preferably 45 to 55 wt %. Conversely therefore, the composition preferably comprises 10 to 90 wt % of polymer B, preferably 30 to 70 wt %, more preferably 40 to 60 wt % and most preferably 45 to 55 wt %.

Polymer A preferably comprises up to 2.5 wt % comonomer, more preferably up to 2 wt % comonomer. Where polymer A is copolymeric, the comonomer is preferably ethylene. Most preferably however, polymer A is a polypropylene homopolymer.

The MFR of polymer A may vary depending on whether it is a homopolymer or a copolymer. Homopolymers may have an MFR in the range 2 to 20 g/10 min, e.g. 5 to 15 g/10 min. Copolymers may have lower MFR's in general with values ranging from 0.5 to 10 g/10 min, e.g. 1 to 5 g/10 min.

The density of this component may be around 890 to 920 kg/m$^3$, e.g. 900 to 910 kg/m$^3$.

The isotacticity of component (A) when it is a homopolymer may be as high as 98% although will preferably be at least 85 %, e.g. in the range 90 to 95 %.

Polymer B generally has an MFR of similar value to that of polymer A, e.g. within 5 g/10 min thereof, preferably within 3 g/10 min thereof. The comonomer content of polymer B may be in the range 0.5 to 10 wt %, preferably 2.5 to 7 wt %, and most preferably 3.5 to 6 wt %. A preferred comonomer is ethylene. Where both components A and B are copolymeric, it is preferred if component B has a higher comonomer content. It will be appreciated that in certain circumstances it will be impossible to measure the properties of either polymer A or polymer B directly e.g. when a component is made second in a multistage process. The person skilled in the art will be able to work out the properties of each component from measurements taken on the first formed component and the overall properties of the polymer composition.

The total comonomer content of the polymer composition is preferably 1 to 5 wt %, more preferably at least 2.5 wt%, e.g. 2.5 to 4 wt %, and most preferably 3 to 4.0 wt %, e.g. 3 to 3.5 wt%.

The polymer of the present invention has a melt flow rate of at least 6 g/10min, e.g. 6 to 50 g/10 min, preferably 7 to 40 g/10min when measured according to ISO 1133 at 230 °C and a load of 2.16 kg. Preferably the melt flow rate is 6 to 35 g/10 min, most preferably 8 to 30 g/10 min.

The xylene soluble fraction of the polymer composition can range from 0.1 to 20 %, preferably 5 to 15 wt%. The melting point of the polymer composition may range from 150 to 180°C, preferably around 160 to 170°C. The polymer composition should also be partially crystalline, e.g. having a crystallinity of the order of 20 to 50 %, e.g. 25 to 40%.

The propylene composition of the invention may also have an average of at least 50, e.g. at least 60, preferably at least 70 chain disruptor units per 1000 propylene repeating units. The disruptor units are formed racemic propylene diads and by comonomer incorporated into the propylene chain. The remainder of the propylene will thus be formed by meso diads.

For the purposes of the present invention, the number of racemic disruptors per 1000 repeat units is defined by the number of racemic sequences disrupting the continuous meso sequences. Quantitatively, the total racemic diad [r] and the racemic tetrad [rrr] concentrations are required to determine the total number of times an isotactic chain is punctuated by either a pair of racemic diads or sequences involving racemic diads. The typical punctuating sequences in an isotactic homopolypropylene are:

- m m m m m m m r r m m m m m m m m -

- m m m m m m r (r)$_n$ r m m m m m m -

- m m m m m m r(m)$_n$ r m m m m m m -

wherein "n" is a number which results in a sequence too short to crystallize. Upon considering the above three types of chain disruptions, the total chain disruptors involving "r" sequences per 1000 repeat units is given by:

$$\text{"r" Chain Disruptors/1000 repeat units} = 500([r] - [rrr])$$

If an olefinic chain disruptor ("O") is utilized as an additional chain punctuating unit, the contribution from these is given by:

$$\text{"O" Chain Disruptors/1000 repeat units} = 1000[O]$$

wherein [O] is the concentration of olefin. The two types of chain disruptors are added to give the total number of chain disruptors per 1000 repeat units.

The processing window (measured as described fully below) should be at least 10°C, preferably at least 12°C, more preferably at least 15°C, especially at least 20°C.

The polymer of the invention is multimodal, preferably bimodal, i.e. its molecular weight profile does not comprise a single peak but instead comprises the combination of two or more peaks (which may or may not be distinguishable) centred about different average molecular weights as a result of the fact that the polymer comprises two or more separately produced components. It is believed that the multimodal nature of the claimed composition allows improvements in processing properties. It is preferred therefore if there is multimodality in the ethylene content of the components.

This can be achieved using a homopolymer and copolymer composition but where both components of the polymer are copolymeric, it is required that the polymers are different to ensure that the polymer composition is multimodal. Preferably therefore, where both components are copolymeric the nature of the comonomer used in each component will be different or the amount of comonomer used in each component will be different, e.g. at least differing by 1 wt%, e.g. at least 2 wt%, preferably at least 3 wt%.

Since the composition is multimodal, the molecular weight distribution of the composition is an important factor.

Such multimodal polymers may be prepared by simple blending, by two or more stage polymerisation or by the use of two or more different polymerisation catalysts in a one stage polymerisation. Preferably however they are produced in a two-stage polymerisation using the same catalyst, e.g. a metallocene catalyst or preferably a Ziegler-Natta catalyst, in particular a slurry polymerisation in a loop reactor followed by a gas phase polymerisation in a gas phase reactor.

Conventional cocatalysts, supports/carriers, electron donors etc. can be used.

A loop reactor - gas phase reactor system is marketed by Borealis A/S, Denmark as a BORSTAR reactor system. The polymer of the invention is thus preferably formed in a two stage process comprising a first slurry loop polymerisation followed by gas phase polymerisation in the presence of a Ziegler-Natta catalyst.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerisation may if desired be effected under supercritical conditions.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with the monomer (i.e. propylene and ethylene when required).

Preferably, component A of the polymer of the invention is produced in a continuously operating loop reactor where propylene (and comonomer when required) are polymerised in the presence of a polymerisation catalyst as stated above and a chain transfer agent such as hydrogen. The diluent is typically an inert aliphatic hydrocarbon, preferably isobutane or propane.

Component B can then be formed in a gas phase reactor using the same catalyst. Prepolymerisation can be employed as is well known in the art. Ziegler-Natta catalysts are preferred. The nature of the Ziegler-Natta catalyst is described in numerous prior publications, e.g. US 5234879.

Alternatively, the polymers of the invention can be made by blending two random copolymers of propylene or by blending one random copolymer with a polypropylene homopolymer in a conventional blending apparatus.

Random copolymers of propylene and propylene homopolymers of use in this invention are commercially available from various suppliers, e.g. Borealis A/S.

The polymer composition of the present invention has a higher MFR than those known in the art. In order to achieve sufficiently high MFR values it may be necessary to modify the propylene polymers and copolymers. Propylene polymers and copolymers can be modified by chemical cracking of the polymer chains often called visbreaking. Visbreaking is carried out in an extruder before moulding operations using organic peroxides with relatively high molar mass in a controlled manner. Statistically higher molar mass chains are cleaved more frequently than are lower molar mass molecules, resulting in an overall decrease in the average molar mass and an increase in MFR. The amount of peroxide fed into the extruder is controlled to reach the desired molar mass and MFR, and depends on the MFR of the reactor product. The formed polypropylene is often termed controlled rheology polypropylene and shows a number of advantages regarding processability, mechanics and optics.

Suitable amounts of peroxide are around 0.01 to 0.1 1 wt%.

The polymer composition of the invention can include minor amounts of standard polymer additives such as polymer processing agent, nucleating agents, anti-oxidants, UV stabilisers etc.

The polymers of the invention are suitable for use in the manufacture of films or articles by injection moulding, film blowing, film casting or by blow moulding. In particular, the polymers of the invention are suitable for the production of articles having biaxial molecular orientation manufactured using ISBM processes.

Preferred articles are bottles, e.g. of 100 ml to 10 L in volume, e.g. 300 ml or 500 ml.

Biaxial orientation improves the physical and optical properties of the polymer, as well as improving the barrier properties. Biaxial molecular orientation is achieved by stretching the polymer at temperatures below the polymer melting point. In ISBM processes biaxial stretching is achieved in the stretch blow moulding step.

Two types of ISBM process are practised. In the single-stage process a preform is injection moulded and blown before it is allowed to cool. In the two-stage process the injection moulded preform is allowed to cool before it is reheated and blown into a container. These processes are well known and the person skilled in the art would be able to choose appropriate process conditions.

Ideally however, the stretching temperatures used are between 110°C and 160 °C, e.g. 130°C. Stretching speeds may range from 20 to 40 m/min in both TD and MD.

Control of the temperature of the polymer during the biaxial stretching step is critical. If the temperature is too high the stretched polymer will include areas of melted polymer, which reduces the molecular orientation, and will show variation in sample thickness. If the temperature is too low it will not be possible to biaxially stretch the polymer without the polymer failing. The processing window for any given polymer is the temperature range over which the polymer can in practice be biaxially stretched.

In the Examples discussed below and for the processing window ranges above, the processing window for biaxial stretching is defined as the difference between the Max. temp and Min. temp wherein:

Max. temp =     the temperature at which a driving force of ION is required to stretch the polymer
Min. temp =     the lowest temperature at which stretching of the polymer is possible without polymer failure

The polymer compositions of the invention exhibit excellent mechanical and optical properties. Haze values of less than 10%, preferably less than 8% are achievable. It is envisaged that the polymer composition of the invention, when biaxially stretched results in a surface of more perfect molecular orientation leading to improved clarity.

Tensile modulus values of greater than 600 MPa, e.g. greater than 650 MPa, preferably greater than 700 MPa are also achievable with the polymer composition of the invention. In general, higher ethylene contents are associated with lower tensile modulus values.

Charpy (23°C), notched values are of the order of 5 to 10 kJ/m$^2$.

The invention will now be described further with reference to the following non-limiting examples and Figures. Figure 1 is a plot of the drawing force in the transverse direction as a function of the drawing temperature for Example 1 and Comparative Example 1. Figure 2 show the processing window for each of Examples 1 to 6, and Comparative Examples 1 and 2. Figure 3 shows Haze as a function of drawing temperature for samples 2, 5 and 6 and comparative Example 1.

**Analytical Tests**

Values quoted in the description/examples are measured according to the following tests:

a) Xylene Solubles (XS):
For the determination of the xylene solubles fraction, 2.0 g of polymer is dissolved in 250 ml *p*-xylene at 135°C under agitation. After $30\pm$ 2 min the solution is allowed to cool for 15 min at ambient temperature and then allowed to settle for 30 min at $25 \pm 0.5$°C. The solution is filtered with filter paper into two 100 ml flasks.
The solution from the first 100 ml vessel is evaporated in nitrogen flow and the residue is dried under vacuum at 90°C until constant weight is reached. The xylene soluble fraction is calculated using the following equation:

$$XS\% = (100 . m_1 . v_o)/(m_o . v_1)$$

wherein

$m_o$ = initial polymer amount (g),
$m_1$ = weight of residue (g),
$v_o$ = initial volume (ml),
$v_1$ = volume of analysed sample (ml).

Isotacticity is measured using the XS value.
b) Melt flow rate (MFR)
$MFR_2$ was measured according to ISO 1133 at 230°C and a load of 2.16 kg.
c) Haze was measured according to ASTM D1003 on drawn film of 0.2mm thickness.
d) Thermal Properties
Melting temperature $T_m$ and the degree of crystallinity were measured with a Mettler TAB20 differential scanning calorimetry (DSC) on $3 \pm 0.5$ mg samples. Both crystallisation and melting curves were obtained during 10°C/min cooling and heating scans between 30° and 225°C. Melting and crystallisation temperatures were taken as the peaks of endotherms and exotherms. The degree of crystallinity was calculated by comparison with the heat of fusion of perfectly crystalline polypropylene i.e. 209 J/g.
e) Viscosity function and Shear Thinning (SHI)
Dynamic rheological measurements were carried out with Rheometrics RDA-II QC on compression molded samples under nitrogen atmosphere at 200°C using 25 mm diameter plate and plate geometry. The oscillatory shear experiments were done within the linear viscoelastic range of strain at frequencies from 0.01 to 500 rad/s. (ISO6721-1)
The values of storage modulus (G'), loss modulus (G"), complex modulus (G*) and complex viscosity (h*) were obtained as a function of frequency (w).
The Zero shear viscosity (h0) was calculated using complex fluidity defined as the reciprocal of complex viscosity. Its real and imaginary part are thus defined by

$$f'(w) = h'( w)/ [h'( w)2 +h'' (w)2 ]$$

and

$$f'' ( w)= h''( w)/ [h'( w)2 +h'' (w)2 ]$$

From the following equations

$$h' = G'' / w \quad \text{and} \quad h''= G'/ w$$

$$f'(w) = G'' (w ) * w/ [G'( w)2 +G'' (w)2 ]$$

$$f''(w) = G' (w ) * w/ [G'( w)2 +G'' (w)2 ]$$

The polydispercity index, PI, is calculated from cross-over point of G'(w) and G"(w).
There is a linear correlation between f' and f" with zero ordinate value of 1 /h0 (Heino et al.1)
For polypropylene this is valid at low frequencies and five first points (5 points/decade) are used in calculation of h0.

Elasticity indexes (G') and shear thinning indexes (SHI), which are correlating with MWD and are independent of MW, were calculated according to Heino 1, 2).

SHI is calculated by dividing the Zero Shear Viscosity by a complex viscosity value, obtained at a certain constant shear stress value, G*. The abbreviation, SHI (0/50), is the ratio between the zero shear viscosity and the viscosity at the shear stress of 50 000 Pa.

1) Rheological characterization of polyethylene fractions. Heino, E.L.; Lehtinen, A; Tanner, J.; Seppälä, J. Neste Oy, Porvoo, Finland. Theor. Appl. Rheol., Proc. Int. Congr. Rheol., 11th (1992), 1 360-362

2)The influence of molecular structure on some rheological properties of polyethylene. Heino, Eeva-Leena. Borealis Polymers Oy, Porvoo, Finland. Annual Transactions of the Nordic Rheology Society, 1995

f) Comonomer content was determined by $C^{13}$NMR.

The C13NMR spectra of polypropylenes were recorded on Bruker 400MHz spectrometer at 130°C from samples dissolved in 1,2,4-trichlorobenzene/benzene-d6 (90/10 w/w). For the pentad analysis the assignment is done according to the methods described in literature.

(T. Hayashi, Y. Inoue, R. Chüjö, and T. Asakura, Polymer 29 138-43 (1988).and Chujo R, et al,Polymer 35 339 (1994).

Meso run length was determined from mmmm and mmmr pentads

MRL= 2 x mmmm/ mmmr.

g) Tensile Modulus and stress at yield are measured according to ISO527-2

h) Charpy, notched is measured according to ISO 179/1eA at 23°C

i) Density is measured according to ISO 1183

k) SEC: The molecular weights and molecular weight distributions of polymers were determined with A Millipore Waters ALC/GPC operating at 135 °C and equipped with two mixed bed and one 107 Å TSK-Gel columns (TOSOHAAS 16S) and a differential refractometer detector. The solvent 1,2,4-trichlorobezene was applied at flow rate of 1 ml/min. The columns were calibrated with narrow molecular weight distribution polystyrene standards and narrow and broad polypropylenes.

**Materials**

The following polymers were employed in the sample formulations:

(i) A random copolymer of propylene and ethylene having an ethylene content of 4.2 wt.% and an MFR is 1.5 g/10 min.

(ii) A polypropylene homopolymer having an MFR of 12.0 g/10 min, a density of 908 kg/m$^3$.

(iii) A random copolymer of propylene and ethylene having an ethylene content of 1 wt.% and an MFR is 1.5 g/10 min.

(iv) A random copolymer of propylene and ethylene having a ethylene content of 5.8 wt% and an MFR of 8 g/10min.

(v) A propylene homopolymer having an MFR of 10 g/10 min

(vi) A random copolymer of propylene and ethylene having a ethylene content of 3.2 wt% and an MFR of 13 g/10min

(vii) A random copolymer of propylene and ethylene having a ethylene content of 3.2 wt% and an MFR of 30 g/10min

(viii) A random copolymer of propylene and ethylene having a ethylene content of 3.3 wt% and an MFR of 20 g/10min.

**Production of Polymer Samples**

Samples 1 and 2 - Random copolymer/homopolymer blends

Sample 1 is a 60/40 wt.% blend of polymers (iv) and (v) respectively, prepared by physical mixing of polymers (iv) and (v) for 3 minutes, followed by compounding in a Prism 24mm double screw extruder at the conditions:

| | |
|---|---|
| Set temperature | 230°C (melt temperature 250°C) |
| N2 pressure: | 1.5 bars |
| Speed: | 300 rpm |
| Die Pressure: | 80 bars |

Sample 2 is a 65/35 wt.% blend of polymers (i) and (ii) respectively, prepared by physical mixing of polymers (i) and (ii) for 3 minutes, followed by compounding in a Prism 24mm double screw extruder at the conditions for sample 1.

In addition 0.05 wt.% of the peroxide Trigonox 101 was added to the blend before physical mixing.

Samples 3 to 6 - Random copolymer/random copolymer blends

Samples 3 to 5 are formed by blending polymer (i) and (iii) in a 60:40 weight ratio, prepared by physical mixing of polymers (i) and (iii) for 3 minutes, followed by compounding in a Prism 24mm double screw extruder at the conditions for sample 1.

In addition, 0.02 wt.%, 0.04 wt.% and 0.06 wt.% of the peroxide Trigonox 101 were added Sample 3, Sample 4 and Sample 5 respectively, before physical mixing of the blends.

Sample 6 is formed by blending polymer (i) and (iii) in a 50:50 weight ratio, prepared by physical mixing of polymers (i) and (iii) for 3 minutes, followed by compounding in a Prism 24mm double screw extruder at the conditions for sample 1.

In addition 0.06 wt.% of the peroxide Trigonox 101 was added before physical mixing of the blend.

Sample 7 - Production of a random copolymer/homopolymer blend in a two-stage polymerisation

A continuous multistage process was used to produce a polymer blend. The process comprised a prepolymerisation step, a loop reactor polymerisation and a fluidized bed gas phase reactor polymerisation.

The catalyst used was highly active, stereospecific transesterified $MgCl_2$-supported Ziegler-Natta catalyst prepared according to US 5,234,879 at a titanization temperature of 135 °C. The catalyst was contacted with a cocatalyst (triethylaluminium, TEAL), and an external donor (donor D, dicyclopentyl dimethoxysilane) with the Al/Ti ratio of 200 and an Al/D ratio of 5, to yield the catalyst system.

The catalyst system and propylene were fed into the prepolymerisation reactor which was operated at 30°C. The prepolymerised catalyst was used in the subsequent polymerisation reactors.

Propylene and hydrogen and the prepolymerised catalyst were fed into the loop reactor which was operated as a bulk reactor at the temperatures as indicated in Table 1 and a pressure of 55 bar.

Then, the polymer slurry stream was fed from the loop reactor into the gas phase reactor which was operated at the temperatures as indicated in Table 1 and a pressure of 20 bar. Propylene, ethylene and hydrogen were fed into the gas phase reactor to control the desired properties of the final polymer.

Table 1

|  | Unit | Example 7 |
|---|---|---|
| Al/D | mol/mol | 5 |
| Al/Ti | mol/mol | 200 |
| Production split (loop:GPR) | mol | 42:58 |
| Loop |  |  |
| Temperature | °C | 85 |
| MFR | g/10 min | 20.9 |
| GPR |  |  |
| Temperature | °C | 85 |
| Final Product |  |  |
| Ethylene | wt.% | 3.7 |
| $MFR_2$ | g/10 min | 19 |
| XS | wt.% | 10.3 |
| $T_m$ | °C | 165 |
| Crystallinity | % | 35 |
| $SHI_{(0/50)}$ | Pa | 5.8 |

Comparative Examples

Comparative Example 1 is formed from polymer (vi) only and comparative Example 2 formed from polymer (vii) only.

Details of the polymers produced and the polymers used in Comparative Examples 1 and 2 are provided in Table 2.

Table 2

| | MFR g/10min | Ethylene content / wt % | Composition |
|---|---|---|---|
| Sample 1 | 9 | 3.5 | 60/40 polymer (iv) and (v) |
| Sample 2 | 30* | 2.7 | 65:35 blend of polymer (i) and (ii) |
| Sample 3 | 10* | 3 | 60:40 blend of polymers (i) and (iii) |
| Sample 4 | 20* | 3 | 60:40 blend of polymers (i) and (iii) |
| Sample 5 | 30* | 3 | 60:40 blend of polymers (i) and (iii) |
| Sample 6 | 30* | 2.7 | 50:50 blend of polymers (i) and (iii) |
| Sample 7 | 19 | 3.7 | Reactor blend of homopolypropylene and propylene/ ethylene random copolymer |
| Comp Ex 1 | 12 | 3.2 | polymer (vi) |
| Comp Ex 2 | 30 | 3.2 | poylmer (vii) |
| *visbroken | | | |

**Example 1 -Injection moulding and biaxial drawing (Simulation of ISBM)**

The Polymer compositions of samples 1 to 6 and Comparative Examples 1 and 2 were stretched in a laboratory stretching frame in order to simulate the stretching stage of an ISBM process.

Boxes of 35 cm x 15 cm x 10 cm, with a thickness of 2mm, were injection moulded at Netstal 1570/300 MPS injection moulding machine at 230°C with an injection speed of 100 mm/s, a holding pressure to 315 grams product weight of box and a holding time of 12 s. Dosing at backpressure of 100 bar and 150 rpm. The mould temperature was 30°C on injection side and 15°C on clamping side. The cooling time was 15 s. From the bottom of these boxes samples of about 86mm x 86mm x 2mm were cut for biaxial drawing in a laboratory film stretcher KARO IV (Brückner Maschinenbau GmbH, Siegsdorf, Germany) at VTT, Tampere, Finland. The plaques were heated in a heating chamber by IR radiation, for a defined period of time 120s before drawing. To simulate as much as possible the ISBM process, the maximum stretch speed of 35m/min was used. The stretch ratio of 3.5 x 3.5 was selected in order to achieve a thickness reduction from 2 mm to 0.2mm (same as in ISBM process). During the simultaneous drawing, force elongation curves were recorded in the machine direction and in the transverse direction.

For each sample the temperature range over which the sample could be stretched without producing visible failures was studied (the processing window).

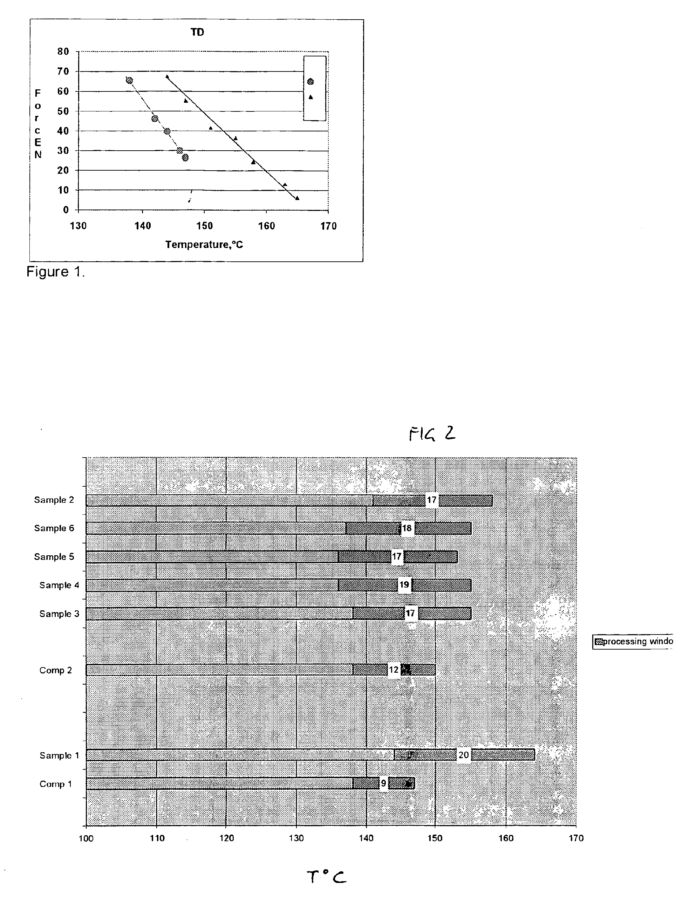

Plots of the drawing force in the transverse direction as a function of the drawing temperature for Example 1 and Comparative Example 1 are shown in Figure 1. It can be clearly seen that the polymer of the present invention has a broader process window for biaxial stretching than the random copolymer of the Comparative Example.

Figure 2 and Table 3 show the processing window for each of Examples 1 to 6, and Comparative Examples 1 and 2. The processing window is represented by the shaded area. The number shown for each Example is the processing window in °C.

Table 3

| Polymer | Processing window °C |
|---|---|
| Sample 1 | 20 |
| Sample 2 | 17 |
| Sample 3 | 17 |
| Sample 4 | 19 |
| Sample 5 | 17 |
| Sample 6 | 18 |
| Comp 1 | 9 |
| Comp 2 | 12 |

The polymers of the present invention provide a significantly broader processing window for ISBM processes than the polymers of the Comparative Examples.

**Example 2 - Optical Properties**

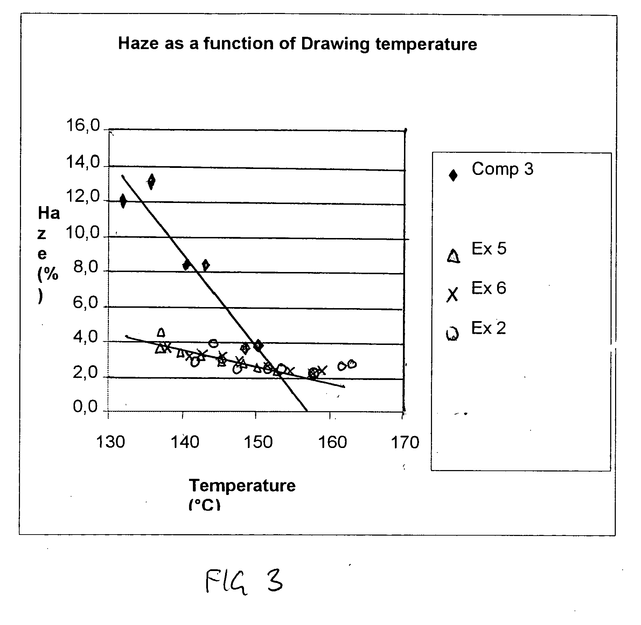

Biaxial orientation of polypropylene improves the optical properties of the polymer. In this investigation 2 mm thick injection moulded plaques, are biaxially drawn with a draw ratio (3.5 x 3.5), resulting in 0.2 mm thick films (as described in Example 1). Haze values have been measured for the films drawn at different temperatures. The polymers of Examples 2, 5 and 6 were compared with a sample of polymer (viii) (Comparative Example 3). The results are presented in Figure 3.

The results show that the clarity of the polymers improves with increasing stretching temperature. At stretching temperatures higher that 150 °C the analysed materials have comparable optical properties. At processing temperatures below 150°C, however, the optical properties of the polymers of the invention are much better than those of Comparative Example 3.

All the materials were clarified with the same concentration of 1,3:2,4-bis(3,4-dimethylbenzylidene sorbitol.

**Claims**

1.  A multimodal polymer composition comprising:

    (A) a polypropylene homopolymer or a propylene random copolymer comprising propylene and up to 5 weight % of comonomer selected from ethylene and/or $C_{4-10}$ alpha olefin; and
    (B) a random copolymer of propylene and comonomer selected from ethylene and/or $C_{4-10}$ alpha olefin;

    wherein the total comonomer content of the polymer composition is at least 0.5 wt% and the melt flow rate of the polymer blend is at least 6 g/10 min when measured according to ISO 1133 at 230°C and a load of 2.16 kg.

2.  A composition as claimed in claim 1 wherein component (A) is a homopolymer.

3.  A composition as claimed in claim 1 or 2 wherein component (B) is a propylene ethylene copolymer.

4.  A composition as claimed in any one of claims 1 to 3 wherein ethylene content of the composition is at least 2.5 wt%.

5.  A composition as claimed in any one of claims 1 to 4 wherein the average no. of chain disruptor units is greater than 50 per 1000 propylene repeating units.

6.  A composition as claimed in any one of claims 1 to 5 having an MFR of 8 to 30 g/10min.

7.  A composition as claimed in any one of claims 1 to 6 having a processing window of at least 15°C.

8.  A process for the preparation of an article, the process comprising injection moulding a polymer composition as hereinbefore defined to prepare a preform and subsequently biaxially stretching and blowing the preform at a temperature below the melting point of the polymer.

9.  A process for the preparation of a polymer composition as hereinbefore described the comprising in a first slurry stage polymerising propylene and optionally ethylene and/or $C_{4-10}$ alpha olefin in the presence of a Ziegler Natta catalyst so as to form

    (A) a polypropylene homopolymer or a propylene random copolymer comprising propylene and up to 5 weight % of comonomer selected from ethylene and/or $C_{4-10}$ alpha olefin;
    transferring the product mixture to a gas phase reactor and subsequently polymerising propylene and ethylene and/or $C_{4-10}$ alpha olefin so as to form
    (B) a random copolymer of propylene and comonomer selected from ethylene or C4-10 alpha olefin;
    wherein the total comonomer content of the polymer composition is at least 0.5 weight % and the melt flow rate of the polymer blend is at least 6 g/10 min when measured according to ISO 1133 at 230°C and a load of 2.16 kg.

10. Use of a polymer composition as hereinbefore described for the manufacture of a film or article by blow moulding, film blowing, film casting or ISBM.

**11.** A film or article having biaxial molecular orientation comprising a polymer composition as hereinbefore described.

Figure 1.

FIG 2

T°C

**Haze as a function of Drawing temperature**

FIG 3

**European Patent Office**

**EUROPEAN SEARCH REPORT**

Application Number

EP 05 25 7141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/070572 A (EXXONMOBIL CHEMICAL PATENTS INC) 12 September 2002 (2002-09-12) * abstract; claims 1-104 * * page 25, line 15 * | 1-11 | INV. C08L23/10 |
| X | WO 98/10016 A (EXXON CHEMICAL PATENTS INC) 12 March 1998 (1998-03-12) * abstract; claims 1-25 * | 1-7,9-11 | |
| X | US 2003/162907 A1 (PELLICONI ANTEO ET AL) 28 August 2003 (2003-08-28) * abstract; claims 1-5 * * page 1, paragraphs 8,11 * * page 3, paragraphs 43,44 * | 1-7 | |
| X | EP 1 170 305 A (ATOFINA RESEARCH) 9 January 2002 (2002-01-09) * abstract; claims 1-7 * * page 3, paragraph 13 * * page 6, line 48 * * page 8; table 1 * | 1-8,10, 11 | TECHNICAL FIELDS SEARCHED (IPC) |
| D,A | EP 0 339 804 A (EXXON CHEMICAL PATENTS INC) 2 November 1989 (1989-11-02) * abstract; claims 1-10 * | 1-11 | C08L C08J |

The present search report has been drawn up for all claims

| Place of search | Date of completion of the search | Examiner |
|---|---|---|
| The Hague | 20 April 2006 | Bergmans, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 05 25 7141

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2006

| Patent document cited in search report | | Publication date | Patent family member(s) | | Publication date |
|---|---|---|---|---|---|
| WO 02070572 | A | 12-09-2002 | EP 1373337 A2 | | 02-01-2004 |
| | | | JP 2004528421 T | | 16-09-2004 |
| WO 9810016 | A | 12-03-1998 | CA 2262468 A1 | | 12-03-1998 |
| | | | CN 1229420 A | | 22-09-1999 |
| | | | DE 69713343 D1 | | 18-07-2002 |
| | | | DE 69713343 T2 | | 10-10-2002 |
| | | | EP 0923618 A1 | | 23-06-1999 |
| | | | ES 2174278 T3 | | 01-11-2002 |
| | | | JP 2001500176 T | | 09-01-2001 |
| US 2003162907 | A1 | 28-08-2003 | BR 0108588 A | | 29-04-2003 |
| | | | CA 2406611 A1 | | 04-07-2002 |
| | | | CN 1404499 A | | 19-03-2003 |
| | | | WO 02051912 A1 | | 04-07-2002 |
| | | | JP 2004516373 T | | 03-06-2004 |
| | | | PL 356722 A1 | | 28-06-2004 |
| EP 1170305 | A | 09-01-2002 | AU 8756101 A | | 14-01-2002 |
| | | | WO 0202653 A1 | | 10-01-2002 |
| | | | JP 2004502796 T | | 29-01-2004 |
| | | | US 2004054024 A1 | | 18-03-2004 |
| EP 0339804 | A | 02-11-1989 | AT 156142 T | | 15-08-1997 |
| | | | CA 1314645 C | | 16-03-1993 |
| | | | DE 68928212 D1 | | 04-09-1997 |
| | | | DE 68928212 T2 | | 13-11-1997 |
| | | | ES 2104560 T3 | | 16-10-1997 |
| | | | JP 2150406 A | | 08-06-1990 |
| | | | JP 2794591 B2 | | 10-09-1998 |
| | | | NO 891780 A | | 30-10-1989 |
| | | | US 4950720 A | | 21-08-1990 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0339804 A

- US 5234879 A

**Non-patent literature cited in the description**

- **HEINO, E.L. ; LEHTINEN, A ; TANNER, J. ; SEPPÄLÄ, J. NESTE OY.** Rheological characterization of polyethylene fractions. *Theor. Appl. Rheol., Proc. Int. Congr. Rheol.,* 1992, vol. 1, 360-362
- **HEINO, EEVA-LEENA ; BOREALIS POLYMERS OY.** The influence of molecular structure on some rheological properties of polyethylene. *Annual Transactions of the Nordic Rheology Society,* 1995

- **T. HAYASHI ; Y. INOUE ; R. CHÜJÖ ; T. ASAKURA.** *Polymer,* 1988, vol. 29, 138-43
- **CHUJO R et al.** *Polymer,* 1994, vol. 35, 339